# FASCICULE DE BREVET EUROPEEN

(11) **EP 1 271 184 B1**
(45) Date de publication et mention de la délivrance du brevet: **10.03.2010**
(21) Numéro de dépôt: 02291519.3
(22) Date de dépôt: 18.06.2002
(51) Int. Cl.: G01V 15/00

(54) **Installation de télésurveillance et procédé mettant en oeuvre cette installation**
Fernüberwachungsanlage und -verfahren
Remote monitoring arrangement and process

(30) Priorité: 19.06.2001 FR 0108018
(43) Date de publication de la demande: 02.01.2003
(73) Titulaire: COMMISSARIAT A L'ENERGIE ATOMIQUE, 75015 Paris (FR)
(72) Inventeur: Flament, Bruno, 38134 Saint Julien de Ratz (FR); Bouvier, Alain, 38420 Revel (FR)
(74) Mandataire: Poulin, Gérard

(56) Documents cités:
- EP-A- 0 999 531
- WO-A-01/79887
- WO-A-99/03060
- FR-A- 2 586 302
- US-A- 6 057 756

## Description

### Domaine technique

La présente invention a pour objet une installation de télésurveillance et un procédé mettant en oeuvre cette installation. ELle trouve une application dans la détection du déplacement de personnes, d'animaux, de pièces, d'appareils, de véhicules, etc... . Il s'agit moins de localiser un objet que d'en surveiller les déplacements.

### Etat de la technique antérieure

On connaît des dispositifs capables de détecter le déplacement d'objets. Ils utilisent des accéléromètres du type à inertie ou à élément piézoélectrique.

Par le document FR-A-2 586 302, on connaît aussi de tels dispositifs utilisant des magnétomètres. Plus précisément, ce document divulgue un procédé pour localiser un objet et déterminer son orientation dans l'espace. Selon cette technique, on munit l'objet à repérer de plusieurs dipoles magnétiques et, à l'aide de plusieurs ensembles de mesure constitués par des magnétomètres directifs, on mesure le champ magnétique produit et l'on en déduit la position et l'orientation d'un vecteur solidaire de l'objet.

Cette technique, si elle donne satisfaction dans l'application visée, ne conviendrait pas lorsqu'il s'agit seulement de détecter le déplacement d'un objet, parce qu'elle est trop complexe et coûteuse.

La présente invention a justement pour but de remédier à cet inconvénient en proposant une installation et un procédé beaucoup plus simples.

### Exposé de l'invention

Selon l'invention, on dispose dans l'espace où est censé se déplacer l'objet (ou les objets) une source (au moins) de champ magnétique et on équipe l'objet d'un moyen de détection du champ, en l'occurrence un magnétomètre, ce moyen travaillant en détection de seuil. Un signal de déplacement sera produit si l'objet se rapproche suffisamment de la source pour que le champ mesuré franchisse un seuil prédéterminé. La source, dont le rayon d'action est adapté aux besoins, est placée en un endroit stratégique (comme un passage de porte, un couloir, etc...) .

De façon plus précise, l'invention a pour objet une installation de télésurveillance d'objet(s), qui est caractérisée en ce qu'elle comprend :
- au moins une source de champ magnétique apte à produire un champ magnétique dans l'espace où est (sont) censé(s) se déplacer l'objet ou les objets,
- lié à chaque objet, un équipement de mesure comprenant un magnétomètre apte à mesurer le champ magnétique dans lequel il baigne, des moyens aptes à comparer le champ mesuré à au moins un seuil et des moyens aptes à émettre un signal représentatif du résultat de cette comparaison,
- un équipement de contrôle apte à recevoir les signaux émis par l'équipement de mesure du ou des objets et à en déduire le déplacement éventuel de cet objet ou de certains objets.

De manière avantageuse, plusieurs sources de champ sont utilisées, chaque source engendrant un champ magnétique identifiable (c'est-à-dire pouvant être attribué à l'une des sources), chaque équipement de mesure comprenant des moyens pour identifier la source à l'origine du champ qu'il mesure.

La présente invention a également pour objet un procédé de télésurveillance d'objet(s), mettant en oeuvre l'installation qui vient d'être définie et qui est caractérisé en ce que :
- on produit au moins un champ magnétique dans l'espace où est (sont) censé(s) se déplacer l'objet ou les objets,
- sur chaque objet on mesure le champ magnétique dans lequel il baigne, on compare le champ mesuré à au moins un seuil prédéterminé et on émet un signal représentatif du résultat de la comparaison,
- on reçoit les signaux émis et on en déduit le déplacement de l'objet ou de certains objets, ou sa (leur) proximité de la source.

### Brève description des dessins

- la figure 1 représente schématiquement une installation selon l'invention avec une seule source de champ magnétique ;
- la figure 2 montre une variante à plusieurs sources dont les champs quadrillent l'espace à surveiller,
- la figure 3 est un schéma synoptique des équipements de mesure et de contrôle ainsi que des sources.

### Description de modes particuliers de mise en oeuvre

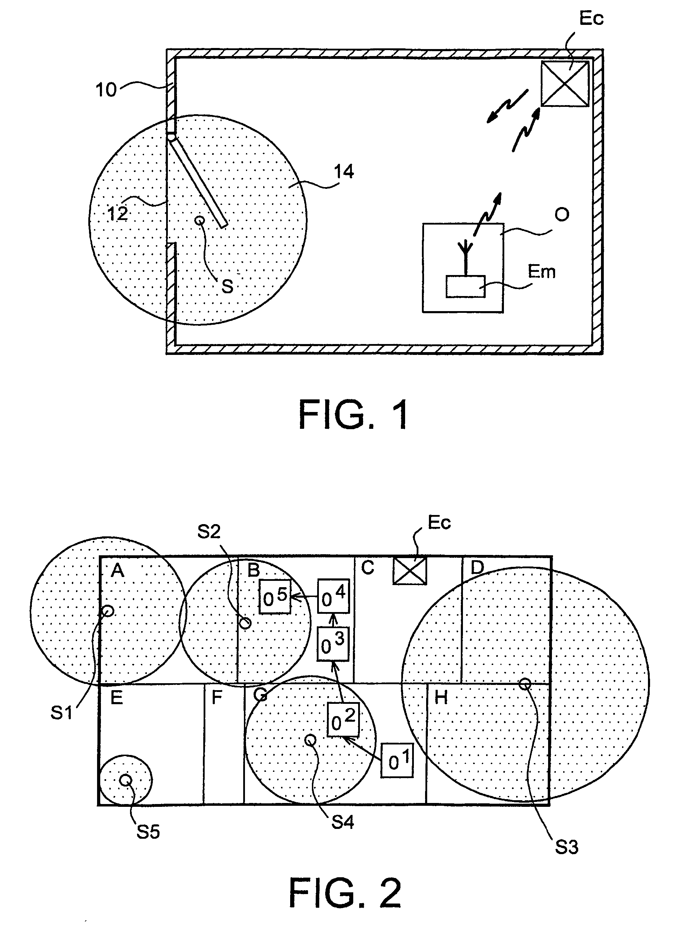

La figure 1 montre une pièce 10 avec une entrée-sortie 12. Dans cette pièce, un objet O (par exemple une personne) porte un équipement de mesure Em et est susceptible de se déplacer, voire de sortir de la pièce. Une source de champ magnétique S est disposée au voisinage de l'entrée-sortie 12. Elle produit un champ magnétique dont l'intensité décroît avec la distance. La sphère 14 marque symboliquement la zone (en pointillé) où cette intensité présente une valeur supérieure à un seuil.

L'équipement de mesure Em comprend un moyen de mesure du champ magnétique, qu'on appellera magnétomètre, apte à mesurer le champ magnétique dans lequel il baigne. Il comprend encore des moyens aptes à comparer le champ mesuré à un seuil prédéterminé (ou à plusieurs seuils). L'équipement Em comprend enfin des moyens d'émission d'un signal représentatif de cette comparaison, par exemple un signal d'alarme indiquant que le seuil a été franchi, ce qui signifie que l'objet O a franchi la limite de la zone 14.

Le magnétomètre peut être un magnétomètre scalaire, ou un magnétomètre uniaxial. Dans ce dernier cas, il mesure la composante du champ sur l'axe.

L'installation représentée se complète par un équipement de contrôle Ec disposé quelque part dans la pièce ou sur l'objet. Cet équipement reçoit et traite le signal émis par l'équipement de mesure Em. Il peut aussi adresser différents signaux de commande à l'équipement de mesure Em et à la source S.

La figure 2 montre une installation plus complexe utilisant plusieurs sources de champ magnétique, respectivement S1, S2, S3, S4, S5. Ces sources engendrent des champs d'intensités diverses (par exemple le champ produit par la source S5 est beaucoup moins intense que celui de la source S3). L'espace représenté comprend 8 pièces A, B, C, ..., G, H dans lesquelles une personne 0 est censée se déplacer. L'installation se complète encore par un équipement de contrôle Ec disposé dans la pièce C.

La figure 2 montre quatre déplacements successifs de la personne, d'un emplacement O¹ à un emplacement O² (déplacement qui peut être détecté grâce au champ produit par la source S4), puis de l'emplacement O² à l'emplacement O³ (détecté encore grâce au champ produit par S4), puis de O³ à O⁴, (déplacement non détecté), enfin, de O⁴ vers un emplacement O⁵ (détecté grâce au champ produit par S2).

Lorsque l'installation comprend plusieurs sources de champ, comme sur la figure 2, il est nécessaire que l'équipement de mesure puisse distinguer les champs pour pouvoir identifier la source à l'origine de celui qu'il mesure. On dit que le champ est "identifiable". Plusieurs moyens sont possibles pour obtenir cette identification :
i) chaque source de champ magnétique peut être équipée de moyens de multiplexage du champ qu'elle engendre, les moyens d'identification étant alors des moyens de démultiplexage. Tous ces moyens peuvent travailler en temps (technique dite TDMA) ou en fréquence (FDMA).
ii) chaque source de champ magnétique peut aussi comprendre des moyens de codage du champ qu'elle engendre, les moyens pour identifier la source à l'origine du champ mesuré étant alors des moyens de décodage correspondants (technique dite CDMA). Les moyens de codage situés dans chaque source et les moyens de décodage situés dans les équipements de mesure peuvent utiliser des séquences binaires pseudo-aléatoires orthogonales deux à deux.

Les moyens d'émission de signal peuvent être quelconques et utiliser les techniques connues d'émission d'ondes électromagnétiques, ou de rayonnement infra-rouge, ou d'ultrasons.

Dans une variante de l'invention, on compare la valeur du champ mesuré à plusieurs seuils (par exemple 2) pour affiner la détermination du déplacement de l'objet surveillé.

Dans une autre variante, le magnétomètre est un magnétomètre vectoriel à au moins un axe et la mesure de la valeur du champ sur l'un au moins des axes permet de mesurer l'activité de l'objet, à savoir s'il est immobile ou non.

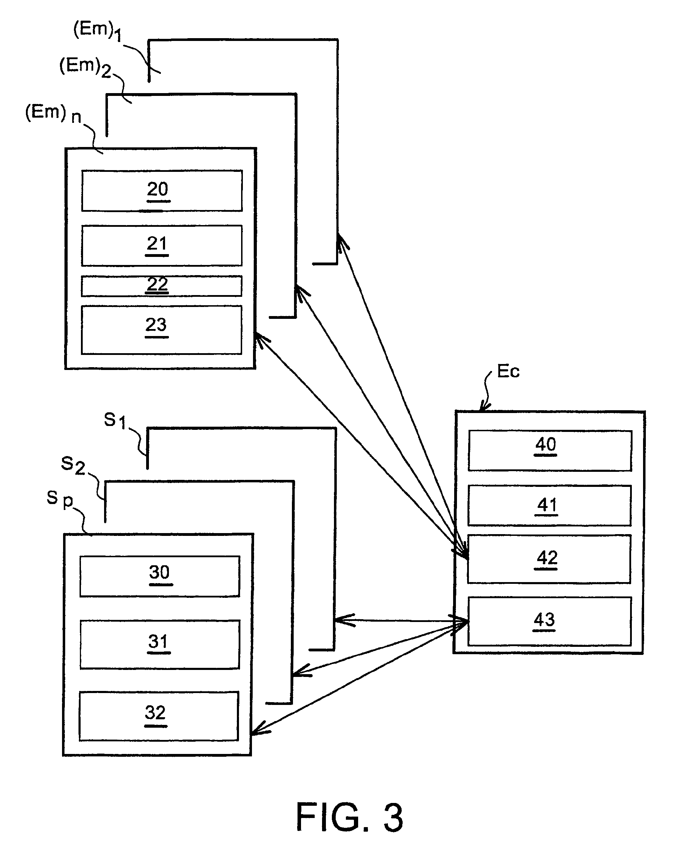

La figure 3 est un schéma synoptique des équipements de mesure et de contrôle ainsi que des sources. On a supposé qu'il existe n équipements de mesure (Em)1, (Em)2, ..., (Em)n, et p sources S1, S2, ..., Sp et un seul équipement de contrôle Ec.

Chaque équipement de mesure comprend un magnétomètre 20, une unité de traitement 21, une alimentation 22 et une unité d'émission/réception 23. Chaque source comprend un moyen 30 produisant un champ magnétique, une unité de traitement 31 et une unité d'émission/réception 32. L'équipement de contrôle Ec comprend une unité d'émission/réception 40, une unité de traitement 41, une unité d'émission/réception 42 pour l'établissement d'une liaison avec les équipements de mesure, et enfin une unité d'émission/réception 43 pour l'établissement d'une liaison avec les sources de champ.

Ces différentes informations peuvent aussi être utilisées par l'unité de traitement pour calculer la position de l'objet (par exemple par triangulation).

Dans la description qui précède les sources de champs sont fixes et les équipements de mesure sont mobiles. On ne sortirait pas du cadre de l'invention en permutant ces dispositions : les sources de champ peuvent être liées aux objets et les équipements de mesure peuvent être fixes et répartis dans l'espace.

## Revendications

1. Installation de télésurveillance d'objet(s), comprenant :
- au moins une source (S) de champ magnétique apte à produire un champ magnétique dans l'espace où est (sont) censé (s) se déplacer l'objet (O) ou les objets,
- destiné à être lié à chaque objet (0), un équipement de mesure (Em) comprenant un magnétomètre apte à mesurer le champ magnétique dans lequel il baigne, des moyens aptes à comparer le champ mesuré à au moins un seuil et des moyens aptes à émettre un signal représentatif du résultat de cette comparaison,
- un équipement de contrôle (Ec) apte à recevoir les signaux émis par l'équipement de mesure (Em) du ou des objets et à en déduire le déplacement éventuel de cet objet ou de certains objets ou sa (leur) proximité de la source.

2. Installation selon la revendication 1, comprenant plusieurs sources de champ (S1, S2, ..., Sp), chaque source engendrant un champ magnétique identifiable, chaque équipement de mesure ((Em)₁, (Em)₂, ..., (Em)ₙ) comprenant des moyens pour identifier la source à l'origine du champ qu'il mesure.

3. Installation selon la revendication 2, dans laquelle chaque source de champ magnétique (S) est équipée de moyens de multiplexage du champ qu'elle engendre et dans laquelle, dans chaque équipement de mesure (Em), les moyens pour identifier la source du champ mesuré sont des moyens de démultiplexage.

4. Installation selon la revendication 3, dans laquelle les moyens de multiplexage et les moyens de démultiplexage travaillent en temps ou en fréquence.

5. Installation selon la revendication 3, dans laquelle chaque source de champ magnétique comprend des moyens de codage du champ qu'elle engendre et dans laquelle les moyens pour identifier la source à l'origine du champ mesuré sont des moyens de décodage correspondants.

6. Installation selon la revendication 5, dans laquelle les moyens de codage situés dans chaque source et les moyens de décodage situés dans les équipements de mesure utilisent des séquences binaires pseudo-aléatoires orthogonales deux à deux.

7. Procédé de télésurveillance d'objet(s), mettant en oeuvre l'installation selon la revendication 1, comprenant les étapes suivantes:
- on produit au moins un champ magnétique dans l'espace où est (sont) censé(s) se déplacer l'objet ou les objets,
- sur chaque objet on mesure le champ magnétique dans lequel il baigne, on compare le champ mesuré à au moins un seuil prédéterminé et on émet un signal représentatif du résultat de la comparaison,
- on reçoit les signaux émis et on en déduit éventuellement le déplacement de l'objet ou de certains objets et/ou sa (leur) proximité de la source.

8. Procédé selon la revendication 7, dans lequel on engendre plusieurs champs magnétiques identifiables dans l'espace où est (sont) censé(s) se déplacer l'objet ou les objets, et dans lequel on identifie le champ que l'on mesure.

9. Procédé selon la revendication 8, dans lequel, dans chaque source de champ magnétique, on multiplexe le champ qu'elle engendre et dans lequel, dans chaque équipement de mesure, on démultiplexe le champ reçu pour identifier la source à l'origine du champ mesuré.

10. Procédé selon la revendication 9, dans lequel on effectue un multiplexage et un démultiplexage en temps ou en fréquence.

11. Procédé selon la revendication 8, dans lequel, dans chaque source de champ magnétique, on code le champ qu'elle engendre et dans laquelle , dans chaque équipement de mesure, on effectue le décodage correspondant.

12. Procédé selon la revendication 11, dans lequel les opérations de codage et de décodage utilisent des séquences binaires pseudo-aléatoires orthogonales deux à deux.

13. Installation selon l'une quelconque des revendications 1 à 6, dans laquelle la (les) source(s) de champ magnétique est (sont) liée(s) à l'objet ou aux objets et dans laquelle les équipements de mesure sont fixes et répartis dans l'espace.

14. Procédé selon l'une quelconque des revendications 7 à 12, dans lequel on dispose la (les) source(s) de champ magnétique sur l'objet ou les objets dont on veut détecter le déplacement et dans lequel on effectue les mesures en des emplacements fixes répartis dans l'espace.

## Claims

1. Installation for the remote surveillance of an object or objects, comprising:
- at least one magnetic field source (S), which generates a magnetic field in the space where the object (O) or objects is/are expected to be moving,
- a measuring device (Em), to be fixed to each object (O) and comprising a magnetometer for measuring the ambient magnetic field, means for comparing the measured field with at least one threshold, and means for transmitting a signal representing the result of this comparison,
- a monitoring device (Ec), which receives the signals transmitted by the measuring device (Em) of the object or objects and establishes any displacement of this object or of particular objects or the proximity thereof to the source.

2. Installation according to claim 1, comprising a plurality of field sources (S1, S2, ..., Sp), each source generating an identifiable magnetic field, each measuring device ((Em)₁, (Em)₂, ..., (Em)ₙ) comprising means for identifying the source from which the field it measures originates.

3. Installation according to claim 2, wherein each magnetic field source (S) is provided with means for multiplexing the field it generates, and wherein, in each measuring device (Em), the means for identifying the source of the measured field are demultiplexing means.

4. Installation according to claim 3, wherein the multiplexing means and demultiplexing means operate in time or in frequency.

5. Installation according to claim 3, wherein each magnetic field source includes means for coding the field which it generates, and wherein the means for identifying the source from which the measured field originates are corresponding decoding means.

6. Installation according to claim 5, wherein the coding means located in each source and the decoding means located in the measuring devices use pairwise orthogonal pseudorandom binary sequences.

7. Process for the remote surveillance of an object or objects using the installation according to claim 1, comprising the following steps:
- at least one magnetic field is generated in the space where the object or objects is/are expected to be moving,
- for each object, the ambient magnetic field is measured, the measured field is compared with at least one predetermined threshold value, and a signal representing the result of the comparison is transmitted,
- the transmitted signals are received and the displacement of the object or of particular objects and/or the proximity thereof to the source may be deduced.

8. Process according to claim 7, wherein a plurality of identifiable magnetic fields are generated in the space where the object or objects is/are expected to be moving, and wherein the measured field is identified.

9. Process according to claim 8, wherein the magnetic field generated by each magnetic field source is multiplexed in said source, and wherein the received field is demultiplexed in each measuring device to identify the source from which the measured field originates.

10. Process according to claim 9, wherein time or frequency multiplexing and demultiplexing are carried out.

11. Process according to claim 8, wherein the magnetic field generated by each magnetic field source is coded in said source, and wherein the corresponding coding is carried out in each measuring device.

12. Process according to claim 11, wherein the coding/decoding operations use pairwise orthogonal pseudorandom binary sequences.

13. Installation according to any one of claims 1 to 6, wherein the magnetic field source(s) is/are connected to the object or objects, and wherein the measuring devices are fixed and spread out in space.

14. Process according to any one of claims 7 to 12, wherein the magnetic field source(s) is/are placed on the object or objects of which the displacement is to be detected, and wherein the measurements are carried out in fixed locations which are distributed in space.

## Patentansprüche

1. Anlage zur Objekt(e)-Fernüberwachung, umfassend:
- wenigstens eine Magnetfeldquelle (S), fähig in dem Raum, wo das Objekt (oder die Objekte) sich bewegen soll(en), ein Magnetfeld zu erzeugen,
- eine Messvorrichtung (Em), dazu bestimmt, mit jedem Objekt (O) verbunden zu sein, dabei umfassend: ein Magnetometer, welches das Magnetfeld, in das es eingetaucht ist, misst, Einrichtungen, die das gemessene Feld mit wenigstens einem Schwellenwert vergleichen, und Einrichtungen, die ein für das Resultat dieses Vergleichs repräsentatives Signal senden,
- eine Kontrollvorrichtung (Ec), fähig die durch die Messeinrichtung (Em) des oder der Objekte gesendeten Signale zu empfangen und die eventuelle Bewegung dieses Objekts (oder bestimmter Objekte) oder seine (ihre) Entfernung von der Quelle daraus abzuleiten.

2. Anlage nach Anspruch 1 mit mehreren Magnetfeldguellen (S1, S2, ..., Sp), wobei jede Quelle ein identifizierbares Magnetfeld erzeugt und jede Messvorrichtung ((Em)₁, (Em)₂, ..., (Em)ₙ) Einrichtungen zum Identifizieren der das von ihr gemessene Feld ursprünglich erzeugenden Quelle umfasst.

3. Anlage nach Anspruch 2, bei der jede Magnetfeldquelle (S) Einrichtungen zum Multiplexen des von ihr erzeugen Magnetfelds umfasst, und bei der - in jeder Messvorrichtung (Em) - die Einrichtungen zum Identifizieren der Quelle des gemessenen Magnetfelds Demultiplex-Einrichtungen sind.

4. Anlage nach Anspruch 3, bei der die Multiplex-Einrichtungen und die Demultiplex-Einrichtungen mit TDM oder FDM arbeiten.

5. Anlage nach Anspruch 3, bei der jede Magnetfeldquelle Einrichtungen zum Codieren des von ihr erzeugten Magnetfelds umfasst, und bei der die Einrichtungen zum Identifizieren der ursprünglichen Quelle des gemessenen Felds entsprechende Decodiereinrichtungen sind.

6. Anlage nach Anspruch 5, bei der die in jeder Quelle vorhandenen Codiereinrichtungen und die in den Messvorrichtungen vorhandenen Decodiereinrichtungen paarweise orthogonale pseudo-aleatorische binäre Sequenzen benutzen.

7. Verfahren zur Objekt(e)- Fernüberwachung unter Benutzung der Anlage nach Anspruch 1, die folgenden Schritte umfassend:
- Erzeugen wenigstens eines Magnetfelds in dem Raum, wo sich das Objekt oder die Objekte bewegen sollen,
- Messen - für jedes Objekt - des Magnetfelds, in das es eingetaucht ist, Vergleichen des gemessenen Magnetfelds mit wenigstens einem vorher bestimmten Schwellenwert und Senden eines für das Resultat des Vergleichs repräsentativen Signals,
- Empfangen der gesendeten Signale und eventuelles Ableiten der Bewegung des Objekts oder bestimmter Objekte und/oder seine (ihre) Nähe zur Quelle.

8. Verfahren nach Anspruch 7, bei dem man in dem Raum, wo sich das Objekt oder die Objekte bewegen sollen und in dem man das zu messende Magnetfeld identifiziert, mehrere identifizierbare Magnetfelder erzeugt.

9. Verfahren nach Anspruch 8, bei dem man in jeder Magnetfeldquelle das von ihr erzeugte Feld multiplext, und bei dem man in jeder Messvorrichtung das empfangene Feld demultiplext, um die ursprüngliche Quelle des gemessenen Feldes zu identifizieren.

10. Verfahren nach Anspruch 9, bei dem man ein Multiplexing und Demultiplexing mittels TDM oder FDM durchführt.

11. Verfahren nach Anspruch 8, bei dem man in jeder Magnetfeldquelle das von ihr erzeugte Feld codiert und bei dem man in jeder Messvorrichtung die entsprechende Decodierung durchführt.

12. Verfahren nach Anspruch 11, bei dem die Codier- und Decodieroperationen paarweise orthogonale pseudo-aleatorische binäre Sequenzen benutzen.

13. Anlage nach einem der Ansprüche 1 bis 6, bei der die Magentfeldquelle(n) mit dem Objekt (oder den Objekten) verbunden ist (sind), und bei der die Messvorrichtungen ortsfest und im Raum verteilt sind.

14. Verfahren nach einem der Ansprüche 7 bis 12, bei dem man die Magnetfeldquelle(n) an dem (oder den) Objekt(en) anordnet, deren Bewegung man detektieren will, und bei dem man die Messungen an festgelegten, im Raum verteilten Stellen durchführt.
